# EUROPEAN PATENT APPLICATION

(11) **EP 4 730 434 A1**
(43) Date of publication of application: **22.04.2026**
(21) Application number: 24893781.5
(22) Date of filing: 07.06.2024
(51) Int. Cl.: H01M 4/525, C01G 53/00, H01M 4/131, H01M 4/505

(54) **POSITIVE ELECTRODE ACTIVE MATERIAL FOR LITHIUM ION BATTERIES, POSITIVE ELECTRODE FOR LITHIUM ION BATTERIES, LITHIUM ION BATTERY, METHOD FOR PRODUCING PRECURSOR OF POSITIVE ELECTRODE ACTIVE MATERIAL FOR LITHIUM ION BATTERIES, AND METHOD FOR PRODUCING POSITIVE ELECTRODE ACTIVE MATERIAL FOR LITHIUM ION BATTERIES**

(30) Priority: 21.11.2023 JP 2023197604
(71) Applicant: JX Advanced Metals Corporation, Tokyo 105-8417 (JP)
(72) Inventor: KAWAHASHI,Yasuhiro, Kitaibaraki-shi, Ibaraki 319-1535 (JP)
(74) Representative: Yeadon IP Limited
(86) International application number: PCT/JP2024/020929
(87) International publication number: WO 2025/109786

(57) **Abstract**

To provide a positive electrode active material for lithium ion batteries that contains Al and exhibits good battery characteristics, a positive electrode for lithium ion batteries, a lithium ion battery, a method for producing a precursor of a positive electrode active material for lithium ion batteries, and a method for producing a positive electrode active material for lithium ion batteries. A positive electrode active material for lithium ion batteries, having a composition represented by the formula: LiₐNi_{(1-b-c-d)}CO_{b}Mn_{c}Al_{d}O₂
(wherein, 0.98≦a≦1.09, 0.06≦b≦0.21, 0.02≦c≦0.32, and 0.0000003≦d≦0.007), a 50% cumulative volume particle size D50 of 3.0 to 11.0 µm, a tap density of 2.0 to 2.6 g/cc, and a c-axis lattice constant of 14.180 to 14.255 Å.

## Description

### FIELD OF THE INVENTION

The present invention relates to a positive electrode active material for lithium ion batteries, a positive electrode for lithium ion batteries, a lithium ion battery, a method for producing a precursor of a positive electrode active material for lithium ion batteries and a method for producing a positive electrode active material for lithium ion batteries.

### BACKGROUND OF THE INVENTION

In recent years, with the rapid spread of small electronic devices such as mobile phones and laptops, the demand for non-aqueous electrolyte secondary batteries as rechargeable power sources has been growing rapidly. As the positive electrode active material for non-aqueous electrolyte secondary batteries, lithium-cobalt composite oxides such as lithium cobalt oxide (LiCoO₂), lithium-nickel composite oxides such as lithium nickel oxide (LiNiO₂), and lithium-manganese composite oxides such as lithium manganese oxide (LiMnO₂) are widely used.

However, nickel and cobalt are relatively expensive metals, and cobalt in particular is known to be a metal with unstable supply and demand due to the limited number of countries where it is produced. Therefore, in recent years, as disclosed in Patent Literature 1, attempts have been made to recover metal components such as lithium, nickel, and cobalt at high purity from discarded electrodes and discarded batteries and recycle them into positive electrode active materials.

### CITATION LIST

### Patent Literatures

[Patent Literature 1] Japanese Unexamined Patent Application Publication No. 2022-532575
[Patent Literature 2] Japanese Unexamined Patent Application Publication No. 11-354118

### SUMMARY OF THE INVENTION

Although the demand for positive electrode active materials for lithium ion secondary batteries is increasing, there is a problem in that excellent positive electrode active materials have variations in cycle performance and storage stability depending on the purity of the synthetic raw materials and the refining conditions. For this reason, as disclosed in Patent Literature 2, it is necessary to control the purity of the positive electrode active material.

Discarded electrodes and batteries contain various metals, such as aluminum (Al)-containing housings as exterior coverings, aluminum foil as electrodes, can bodies, and flame-retardant materials to prevent fires. Therefore, significant refining costs are required to recover high-purity nickel, cobalt, and lithium, resulting in high production costs for positive electrode active materials. Refining and extraction of Al, in particular, is difficult, and significant recycling costs are required to completely remove it.

Thus, from the perspective of controlling the purity of the positive electrode active material and improving battery characteristics, it is desirable to eliminate impurities such as Al. However, when high-purity nickel, cobalt, and lithium are recovered for recycling discarded electrodes and waste batteries, the cost of removing Al becomes an issue.

The present invention has been made to solve the above-mentioned problems, and an object of the present invention is to provide a positive electrode active material for lithium ion batteries that contains Al and exhibits good battery characteristics, a positive electrode for lithium ion batteries, a lithium ion battery, a method for producing a precursor of a positive electrode active material for lithium ion batteries, and a method for producing a positive electrode active material for lithium ion batteries.

The present invention, which has been completed based on the above findings, is defined below.
[1] A positive electrode active material for lithium ion batteries, having a composition represented by the formula: LiₐNi_{(1-b-c-d)}CO_{b}Mn_{c}Al_{d}O₂
   (wherein, 0.98≦a≦1.09, 0.06≦b≦0.21, 0.02≦c≦0.32, and 0.0000003≦d≦0.007), a 50% cumulative volume particle size D50 of 3.0 to 11.0 µm, a tap density of 2.0 to 2.6 g/cc, and a c-axis lattice constant of 14.180 to 14.255 Å.
[2] The positive electrode active material for lithium ion batteries according to [1], having a BET specific surface area of 0.20 to 0.80 m²/g.
[3] A positive electrode for lithium ion batteries, comprising the positive electrode active material for lithium ion batteries according to [1] or [2].
[4] A lithium ion battery comprising the positive electrode for lithium ion batteries according to [3] and a negative electrode.
[5] A method for producing a precursor of a positive electrode active material for lithium ion batteries, wherein the precursor is represented by the composition formula: Ni_{(1-b-c-d)}CO_{b}Mn_{c}Al_{d}(OH)₂
   (In the formula, 0.06≦b≦0.21, 0.02≦c≦0.32, and 0.0000003≦d≦0.007),
   the precursor has a 50% cumulative volume particle size D50 of 3.0 to 11.0 µm, a tap density of 1.8 to 2.4 g/cc, and a BET specific surface area of 4.0 to 12.0 m²/g, and
   the method comprises:
      using an aqueous solution containing (a) a nickel salt, (b) a cobalt salt, (c) a manganese salt, and (d) an aluminum salt, and (e) a basic aqueous solution containing ammonia and/or a basic aqueous solution of an alkali metal as a reaction solution, and conducting a crystallization reaction while controlling a pH of the reaction solution to 10.0 to 11.5, an ammonium ion concentration to 7 to 20 g/L, and a solution temperature to 59 to 61° C.
[6] A method for producing a positive electrode active material for lithium ion batteries, comprising:
   mixing a precursor produced by the method for producing the precursor of the positive electrode active material for lithium ion batteries according to [5] with a lithium source so that the ratio (Liₙ/Meₙ) of the number of lithium atoms (Liₙ) to the sum of the numbers of atoms of metals consisting of Ni, Co, and Mn (Meₙ) is 0.98 to 1.09 to form a lithium mixture; and
   firing the lithium mixture in air or an oxygen atmosphere at 450 to 750°C for 2 to 15 hours, and then further firing it at 700 to 900°C for 2 to 15 hours.

According to the present invention, it is possible to provide a positive electrode active material for lithium ion batteries that contains Al and exhibits good battery characteristics, a positive electrode for lithium ion batteries, a lithium ion battery, a method for producing a precursor of a positive electrode active material for lithium ion batteries, and a method for producing a positive electrode active material for lithium ion batteries.

### DETAILED DESCRIPTION OF THE INVENTION

Next, the embodiments for carrying out the present invention will be described in detail. It should be understood that the present invention is not limited to the following embodiments, and that appropriate design changes, improvements, etc. may be made based on the ordinary knowledge of those skilled in the art without departing from the spirit of the present invention.

### (Positive Electrode Active Material for Lithium Ion Batteries)

A positive electrode active material for lithium ion batteries according to an embodiment of the present invention is represented by the composition formula: LiₐNi_{(1-b-c-d)}CO_{b}Mn_{c}Al_{d}O₂ (wherein 0.98≦a≦1.09, 0.06≦b≦0.21, 0.02≦c≦0.32, and 0.0000003≦d≦0.007). In the composition formula, the value of a, which indicates the lithium composition, is controlled to satisfy the condition of 0.98≦a≦1.09. Because the value of a, which indicates the lithium composition, is 0.98 or more, reduction of nickel due to lithium deficiency can be suppressed. Furthermore, because the value of a, which indicates the lithium composition, is 1.09 or less, residual alkaline components, such as lithium carbonate and lithium hydroxide, present on the surface of the positive electrode active material particles, which may become resistance components when the battery is formed, can be suppressed.

In the positive electrode active material for lithium ion batteries according to the embodiment of the present invention, the nickel composition in the composition formula is controlled to 1-b-c-d (0.463≦1-b-c-d≦0.9199997), and since the nickel composition is 0.463 or more, good battery capacity can be obtained for lithium ion batteries. Furthermore, since the nickel composition is 0.9199997 or less, the crystal structure is stable and the expansion and contraction behavior of the crystal lattice due to lithium insertion and extraction during charge and discharge can be reduced, thereby improving cycle characteristics.

In the positive electrode active material for lithium ion batteries according to an embodiment of the present invention, the sum of b, which represents the cobalt composition, c, which represents the manganese composition, and d, which represents the aluminum composition, satisfies 0.0800003≦b+c+d≦0.537 in the composition formula, thereby improving cycle characteristics and reducing the expansion and contraction behavior of the crystal lattice due to lithium insertion and extraction during charge and discharge. If the sum of b, which represents the cobalt composition, c, which represents the manganese composition, and d, which represents the aluminum composition, exceeds 0.537, the amounts of cobalt, manganese, and aluminum added may be too large, resulting in a significant decrease in initial discharge capacity or may be disadvantageous in terms of cost.

In the positive electrode active material for lithium ion batteries according to an embodiment of the present invention, d, which indicates the aluminum composition, is controlled to 0.0000003≦d≦0.007. Because d, which indicates the aluminum composition, is 0.0000003 or greater, cycle characteristics are improved and the expansion and contraction behavior of the crystal lattice due to lithium insertion and extraction during charge and discharge can be reduced. When d, which indicates the aluminum composition, exceeds 0.007, the amount of aluminum added is too large, resulting in a significant decrease in initial discharge capacity. Thus, the positive electrode active material for lithium ion batteries according to an embodiment of the present invention contains Al, yet the battery characteristics of lithium ion batteries using the same are excellent. Therefore, when recovering high-purity nickel, cobalt, and lithium for recycling discarded electrodes and waste batteries, the cost of removing Al can be reduced, and a lithium ion battery with excellent battery characteristics can be produced using the positive electrode active material for lithium ion batteries.

The positive electrode active material for lithium ion batteries according to the embodiment of the present invention may be in the form of secondary particles formed by agglomeration of a plurality of primary particles, with some primary particles not agglomerated as secondary particles. The shapes of the primary particles constituting the secondary particles and the primary particles present alone are not particularly limited, and may be various shapes, such as substantially spherical, substantially elliptical, substantially plate-like, or substantially needle-like. The form in which the plurality of primary particles is agglomerated is also not particularly limited, and may be various forms, such as agglomeration in random directions or agglomeration approximately uniformly radially from the center to form substantially spherical or substantially elliptical secondary particles.

The positive electrode active material for lithium ion batteries according to an embodiment of the present invention has a 50% cumulative volume particle size D50 of 3.0 to 11.0 µm. Here, the 50% cumulative volume particle size D50 is the volume particle size at 50% accumulation in a volume-based cumulative particle size distribution curve. If the 50% cumulative volume particle size D50 of the positive electrode active material for lithium ion batteries is less than 3.0 µm, the tap density decreases, resulting in a decrease in energy density per volume. If the 50% cumulative volume particle size D50 of the positive electrode active material for lithium ion batteries exceeds 11.0 µm, the number of coarse particles increases, resulting in poor applicability when the slurried positive electrode active material is applied to a current collector. The 50% cumulative volume particle size D50 of the positive electrode active material for lithium ion batteries is preferably 7.0 to 10.0 µm. The 50% cumulative volume particle size D50 was measured by first dispersing 100 mg of a positive electrode active material sample (powder) using a Microtrac laser diffraction particle size distribution analyzer "MT3300EXII" at a 50% flow rate under 40 W ultrasonic irradiation for 60 seconds, and then measuring the particle size distribution to obtain a volume-based cumulative particle size distribution curve. Next, in the obtained cumulative particle size distribution curve, the volume particle size at 50% accumulation can be used as the 50% cumulative volume particle size D50 of the positive electrode active material powder. The aqueous solvent used in the measurement is passed through a 0.02 µm filter, with a solvent refractive index of 1.333, particle permeability conditions of transparent, the particle refractive index of 1.81, and shape of asphericity. The measurement range is 0.021 to 2000 µm, and the measurement time is 30 seconds.

The positive electrode active material for lithium ion batteries according to an embodiment of the present invention has a tap density of 2.0 to 2.6 g/cc. A positive electrode active material with a tap density of 2.0 g/cc or higher can form a battery with a high energy density per volume. The tap density of the positive electrode active material is preferably 2.1 to 2.6 g/cc, and more preferably 2.3 to 2.4 g/cc. The tap density of the positive electrode active material is measured, for example, by placing 5 g of the positive electrode active material (powder) into a 10 cc graduated cylinder, placing it in a powder density measuring instrument "KYT-4000K" manufactured by Seishin Enterprise Co., Ltd., and tapping 1,500 times with a stroke length of 55 mm, followed by reading the graduations on the graduated cylinder. Next, the "sample amount (5 g) / graduated cylinder graduation reading (cc)" is calculated, and this is taken as the tap density (g/cc).

The positive electrode active material for lithium ion batteries according to an embodiment of the present invention has a c-axis lattice constant controlled to 14.180 to 14.255 Å. When the c-axis lattice constant of the positive electrode active material is 14.180 Å or greater, the crystal structure of the positive electrode active material for lithium ion batteries is stabilized, ensuring Li insertion and extraction. When the c-axis lattice constant of the positive electrode active material exceeds 14.255 Å, the crystal lattice is distorted, reducing Li mobility and thereby degrading load characteristics, potentially resulting in a deterioration in the charge and discharge capacity of the lithium ion battery. The c-axis lattice constant of the positive electrode active material is preferably 14.183 to 14.252 Å. The c-axis lattice constant of the positive electrode active material can be measured, for example, using the following XRD diffractometer under the following conditions:
- XRD Diffractometer: SmartLab (Rigaku Corporation)
- Radiation Source: CuKα (λ=1.5406Å)
- Sample (positive electrode active material) was applied to a glass sample holder (2cm x 1.5cm, 0.3mm deep).
- Detector: D/tex
- Measurement Range: 2θ=10° to 80°
- Scan Axis: 2θ/θ, Scan Speed: 1° min⁻¹
- Step Width: 0.01°
- Slit width: IS (DS) 1/4°, RS1 10 mm, RS2 10 mm

The c-axis lattice constant can be calculated using the analytical software "PDXL" (Rigaku Corporation) from the peaks derived from nine crystal planes (003), (101), (012), (104), (015), (107), (018), (110), and (113) in the XRD diffraction pattern measured under the above conditions.

The positive electrode active material for lithium ion batteries according to an embodiment of the present invention preferably has a BET specific surface area of 0.20 to 0.80 m²/g. A BET specific surface area of 0.20 m²/g or greater increases the contact area of the positive electrode active material, resulting in improved Li-ion conductivity. This enables the production of high-capacity lithium ion batteries. Furthermore, a BET specific surface area greater than 0.80 m²/g accelerates the precipitation reaction of lithium ions from residual alkali in the positive electrode active material during repeated charge and discharge. The precipitated lithium compounds contribute to the internal resistance of the battery, reducing the charge and discharge capacity. The BET specific surface area is more preferably 0.3 to 0.70 m²/g. The BET specific surface area can be measured by the following method. Specifically, 1.0 g of the positive electrode active material (powder) is weighed into a glass cell, placed in a degasser, and filled with nitrogen gas. The cell is then heat-treated in a nitrogen gas atmosphere at 40°C for 20 minutes to degas the cell. Thereafter, the glass cell containing the degassed sample (powder) is set in a specific surface area measuring device "Monosorb Model MS-21" manufactured by Quantachrome, and the specific surface area X is measured by the BET method (single point method) while flowing a mixed gas of He: 70 at % - N₂: 30 at % as the adsorption gas.

### (Method for Producing Precursor of Positive Electrode Active Material for Lithium Ion Batteries)

Next, a method for producing a precursor of a positive electrode active material for lithium ion batteries according to an embodiment of the present invention will be described in detail.

The precursor of a positive electrode active material for lithium ion batteries according to an embodiment of the present invention is represented by the composition formula: Ni_{(1-b-c-d)}CO_{b}Mn_{c}Al_{d}(OH)₂

### (In the formula, 0.06≦b≦0.21, 0.02≦c≦0.32, and 0.0000003≦d≦0.007.)

The precursor has a 50% cumulative volume particle size D50 of 3.0 to 11.0 µm, a tap density of 1.8 to 2.4 g/cc, and a BET specific surface area of 4.0 to 12.0 m²/g.

In a method for producing a precursor of a positive electrode active material for lithium ion batteries according to an embodiment of the present invention, first, aqueous solutions containing (a) a nickel salt, (b) a cobalt salt, (c) a manganese salt, and (d) an aluminum salt are prepared, and (e) a basic aqueous solution containing ammonia and/or a basic aqueous solution of an alkali metal is prepared. Examples of (a) nickel salts include nickel sulfate, nickel nitrate, or nickel chloride. Examples of (b) cobalt salts include cobalt sulfate, cobalt nitrate, or cobalt hydrochloride. Examples of (c) manganese salts include manganese sulfate, manganese nitrate, or manganese hydrochloride. Examples of (d) aluminum salts include aluminum sulfate, sodium aluminate, aluminum nitrate, or aluminum chloride. The aluminum salt may be added as a raw material or may be mixed in as an impurity. Examples of (e) basic aqueous solutions containing ammonia include an ammonia solution, an ammonium sulfate solution, an ammonium carbonate solution, an ammonium hydrochloride solution, etc. Examples of basic aqueous solutions of alkali metals include aqueous solutions of sodium hydroxide, potassium hydroxide, carbonate, etc. Examples of the aqueous carbonate solution include aqueous solutions using salts of carbonate groups, such as aqueous sodium carbonate solution, aqueous potassium carbonate solution, aqueous sodium hydrogen carbonate solution, and aqueous potassium hydrogen carbonate solution.

The composition of the aqueous solution can be adjusted appropriately depending on the composition of the precursor to be produced, but is preferably (a) an aqueous solution containing 30 to 150 g/L of nickel ions, (b) an aqueous solution containing 3 to 25 g/L of cobalt ions, (c) an aqueous solution containing 1 to 32 g/L of manganese ions, (d) an aqueous solution containing 0.001 to 0.2 g/L of aluminum ions, or (e) a basic aqueous solution containing 7 to 28 mass % of ammonia and/or a basic aqueous solution with an alkali metal concentration of 10 to 30 mass %.

Next, the aqueous solution containing the above-mentioned (a) nickel salt, (b) cobalt salt, (c) manganese salt, and (d) aluminum salt, and the aqueous solution containing (e) ammonia-containing basic aqueous solution and/or alkali metal basic aqueous solution are used as reaction solutions, and a crystallization reaction is carried out while controlling the pH of the reaction solution to 10.0 to 11.5, the ammonium ion concentration to 7 to 20 g/L, and the solution temperature to 59 to 61°C. At this time, chemical solutions may be sent to the reaction tank from three tanks: a tank containing a mixed aqueous solution of nickel salt, cobalt salt, manganese salt, and aluminum salt, a tank containing ammonia-containing basic aqueous solution, and a tank containing an alkali metal basic aqueous solution. By carrying out the crystallization reaction while controlling the pH of the reaction solution during the coprecipitation reaction between 10.0 and 11.5, the ammonium ion concentration between 7 and 20 g/L, and the solution temperature between 59 and 61°C, the metal solubility in the reaction solution can be controlled, producing particles with uniformly dispersed aluminum, thereby producing a precursor of the positive electrode active material according to an embodiment of the present invention with excellent discharge characteristics. Furthermore, by optimizing the reaction conditions for the metal hydroxide precursor as described above, adhesion of impurities to the surface of the positive electrode active material obtained after firing is effectively suppressed, eliminating the need for cleaning. Furthermore, a chelating agent or metal oxide coating is not required during the coprecipitation reaction. As a result, production efficiency is improved.

### (Method for Producing Positive Electrode Active Material for Lithium Ion Batteries)

Next, a method for producing a positive electrode active material for lithium ion batteries according to an embodiment of the present invention will be described in detail. In a method for producing a positive electrode active material for lithium ion batteries according to an embodiment of the present invention, first, a lithium source is mixed with the precursor of the positive electrode active material for lithium ion batteries according to an embodiment of the present invention, prepared as described above, so that the ratio (Liₙ/Meₙ) of the number of lithium atoms (Liₙ) to the sum of the numbers of atoms of metals consisting of Ni, Co, and Mn (Meₙ) is 0.98 to 1.09 to form a lithium mixture. Examples of the lithium source include lithium carbonate and lithium hydroxide. As a mixing method, it is preferable to adjust the mixing ratio of each raw material and dry mix them using a Henschel mixer, automatic mortar, V-type mixer, or the like.

Next, the lithium mixture is fired in an air atmosphere, preferably an oxygen atmosphere, at 450 to 750°C. for 2 to 15 hours, and then further fired at 700 to 900°C for 2 to 15 hours. Thereafter, if necessary, the fired body can be crushed using, for example, a pulverizer or the like to obtain a powder of the positive electrode active material.

### (Positive Electrode for Lithium Ion Batteries and Lithium Ion Battery)

The positive electrode for lithium ion batteries according to the embodiment of the present invention has a structure in which a positive electrode mixture prepared by mixing the positive electrode active material for lithium ion batteries having the above-described configuration, a conductive additive, and a binder is provided on one or both sides of a current collector. The lithium ion battery according to the embodiment of the present invention also includes a positive electrode for lithium ion batteries having such a configuration and a known negative electrode for lithium ion batteries.

Examples of conductive additives include metal-based conductive additives (aluminum, stainless steel (SUS), silver, gold, copper, titanium, etc.), carbon-based conductive additives (graphite and carbon black (acetylene black, ketjen black, furnace black, channel black, thermal lamp black), etc.), and mixtures thereof. These conductive additives may be used alone or in combination of two or more. They may also be used as alloys or metal oxides. Among these, from the viewpoint of electrical stability, more preferred are aluminum, stainless steel, silver, gold, copper, titanium, carbon-based conductive additives, and mixtures thereof, even more preferred are silver, gold, aluminum, stainless steel, and carbon-based conductive additives, and particularly preferred are carbon-based conductive additives. Furthermore, these conductive additives may be particulate ceramic materials or resin materials coated with a conductive material (preferably a metal one of the above-mentioned conductive additives) by plating or the like. The shape (form) of the conductive additive is not limited to a particulate form, and may be a form other than a particulate form, such as carbon nanofibers or carbon nanotubes, which are so-called filler-based conductive additives in practical use.

Examples of binders include substances commonly used in positive electrode mixtures for lithium ion batteries, but copolymers having a structure derived from vinylidene fluoride, polyvinylidene fluoride (PVDF), copolymers or homopolymers having a structure derived from tetrafluoroethylene (TEF), and copolymers or homopolymers having a structure derived from hexafluoropropylene (HFP) are preferred. Specific examples include PVDF-HFP, PVDF-HFP-TEF, PVDF-TEF, and TEF-HFP.

The positive electrode mixture is prepared by mixing the positive electrode active material for lithium ion batteries, a conductive additive, and a binder in a solvent to form a positive electrode mixture slurry, which is then applied to one or both sides of a current collector and, after drying or the like, provided on the current collector to form a positive electrode active material layer.

As the solvent for the positive electrode mixture slurry, known organic solvents such as hydrocarbon organic solvents, amide compounds, lactam compounds, urea compounds, organic sulfur compounds, and cyclic organic phosphorus compounds can be used alone or as a mixed solvent. Examples of hydrocarbon organic solvents that can be used include saturated hydrocarbons, unsaturated hydrocarbons, and aromatic hydrocarbons. Examples of saturated hydrocarbons include hexane, pentane, 2-ethylhexane, heptane, decane, and cyclohexane. Examples of unsaturated hydrocarbons include hexene, heptene, and cyclohexene. Examples of aromatic hydrocarbons include toluene, xylene, decalin, and 1,2,3,4-tetrahydronaphthalene. Of these, toluene and xylene are particularly preferred.

Materials constituting the current collector include metal materials such as copper, aluminum, titanium, stainless steel, nickel, and alloys thereof, as well as baked carbon, conductive polymer materials, conductive glass, etc. Among these, aluminum is more preferable from the viewpoints of weight reduction, corrosion resistance, and high conductivity. Furthermore, the current collector is preferably a resin current collector made of a conductive polymer material. The shape of the current collector is not particularly limited, and may be a sheet-like current collector made of the above material, or a sediment layer made of fine particles composed of the above material. The thickness of the current collector is not particularly limited, but is preferably 1 to 30 µm. Examples of conductive polymer materials that can be used to constitute the resin current collector include conductive polymers and resins to which a conductive material has been added as needed.

From the viewpoint of battery performance, the thickness of the positive electrode for lithium ion batteries is preferably 10 to 100 µm, and more preferably 20 to 50 µm.

Lithium ion battery using the positive electrode for lithium ion batteries is produced by combining a counter electrode with a negative electrode, placing them together with a separator in a cell container, injecting an electrolyte, and sealing the cell container. Alternatively, a bipolar electrode can be produced by forming a positive electrode on one side of a current collector and a negative electrode on the other, stacking the bipolar electrode with a separator, placing it in a cell container, injecting an electrolyte, and sealing the cell container.

The negative electrode may include a negative electrode active material, a conductive additive, a current collector, etc. As the negative electrode active material, known negative electrode active materials for lithium ion batteries can be used, and examples thereof include carbon-based materials (graphite, non-graphitizable carbon, amorphous carbon, baked resins (e.g., baked and carbonized phenolic resins, furan resins, etc.), cokes (e.g., pitch coke, needle coke, petroleum coke, etc.), and carbon fibers), silicon-based materials (silicon, silicon oxide (SiOₓ), silicon-carbon composites (carbon particles whose surfaces are coated with silicon and/or silicon carbide, silicon particles or silicon oxide particles whose surfaces are coated with carbon and/or silicon carbide, silicon carbide, etc.), and and silicon alloys (silicon-aluminum alloys, silicon-lithium alloys, silicon-nickel alloys, silicon-iron alloys, silicon-titanium alloys, silicon-manganese alloys, silicon-copper alloys, silicon-tin alloys, etc.), conductive polymers (for example, polyacetylene and polypyrrole), metals (tin, aluminum, zirconium, titanium, etc.), metal oxides (titanium oxides and lithium-titanium oxides, etc.), metal alloys (for example, lithium-tin alloys, lithium-aluminum alloys, lithium-aluminum-manganese alloys, etc.), and mixtures of these with carbon-based materials. In addition, the conductive additive can suitably be the same conductive additive as that used for the positive electrode described above.

The current collector may be the same as the current collector constituting the positive electrode described above, and is preferably copper from the viewpoints of weight reduction, corrosion resistance, and high conductivity. A resin current collector may also be used, and the same current collector as the current collector constituting the positive electrode described above can be suitably used. The thickness of the current collector is not particularly limited, but is preferably 10 to 60 µm.

Examples of the separator include known separators for lithium ion batteries, such as porous films made of polyethylene or polypropylene, laminated films of porous polyethylene film and porous polypropylene, nonwoven fabrics made of synthetic fibers (polyester fibers, aramid fibers, etc.) or glass fibers, and those having ceramic fine particles such as silica, alumina, or titania attached to the surface thereof.

### EXAMPLES

The following examples are provided to provide a better understanding of the present invention and its advantages, but the present invention is not limited to these examples.

### (Example 1)

First, a 1.5 mol/L mixed metal salt solution was prepared by weighing out the required amounts of nickel sulfate, cobalt sulfate, and manganese sulfate to achieve a Ni:Co:Mn ratio of 50:20:30. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were adjusted to 10.6 and 10.3 g/L, respectively. A crystallization reaction was then carried out, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was also introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried at 120°C for 12 hours using a box dryer. This produced a precursor of the positive electrode active material.

Then, lithium carbonate and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 900°C and held at that temperature for 8 hours to obtain the positive electrode active material.

### (Example 2)

First, a 1.5 mol/L mixed metal salt solution was prepared by weighing out the required amounts of nickel sulfate, cobalt sulfate, and manganese sulfate to achieve a Ni:Co:Mn ratio of 50:20:30. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were 10.4 and 11.5 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried in a box dryer at 120°C for 12 hours. This produced a precursor of the positive electrode active material.

Then, lithium carbonate and the precursor of the positive electrode active material were mixed so that the ratio of the number of lithium (Li) atoms (Li/Me), where Me is the sum of the number of atoms of the metals Ni, Co, and Mn in the precursor of the positive electrode active material, was 1.09. This mixture was mixed in an automatic mortar for 30 minutes to obtain a mixed powder. The mixed powder was then filled into an alumina sagger and fired in a muffle furnace in air at 750°C for 2 hours, then heated to 900°C and held at that temperature for 8 hours to obtain the positive electrode active material.

### (Example 3)

First, a 1.5 mol/L mixed metal salt solution was prepared by weighing out the required amounts of nickel sulfate, cobalt sulfate, and manganese sulfate to achieve a Ni:Co:Mn ratio of 50:20:30. The Al concentration of this mixed metal salt solution was less than 0.001 g/L.

Next, the mixed metal salt solution, ammonia water, and a 20% by mass aqueous sodium hydroxide solution were pumped into a reactor equipped with an agitator so that the pH and ammonium ion concentration in the reactor were 10.3 and 8.2 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried in a box dryer at 120°C for 12 hours. This produced a precursor of the positive electrode active material.

The precursor of the positive electrode active material was then mixed with lithium carbonate so that the ratio of the number of lithium (Li) atoms (Li/Me), where Me is the sum of the number of atoms of the metals Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 880°C and held at that temperature for 8 hours to obtain the positive electrode active material.

### (Example 4)

First, a 1.5 mol/L mixed metal salt solution was prepared by weighing out the required amounts of nickel sulfate, cobalt sulfate, and manganese sulfate to achieve a Ni:Co:Mn ratio of 50:20:30. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were adjusted to 10.1 and 11.2 g/L, respectively. A crystallization reaction was then carried out, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was also introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried at 120°C for 12 hours using a box dryer. This produced a precursor of the positive electrode active material.

Then, lithium carbonate and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 900°C and held at that temperature for 8 hours to obtain the positive electrode active material.

### (Example 5)

First, a 1.5 mol/L mixed metal salt solution was prepared by weighing out the required amounts of nickel sulfate, cobalt sulfate, and manganese sulfate to achieve a Ni:Co:Mn ratio of 50:20:30. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were 10.2 and 11.3 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried at 120°C for 12 hours using a box dryer. This produced a precursor of the positive electrode active material.

Then, lithium carbonate and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 880°C and held at that temperature for 8 hours to obtain the positive electrode active material.

### (Example 6)

First, a 1.5 mol/L mixed metal salt solution was prepared by weighing out the required amounts of nickel sulfate, cobalt sulfate, and manganese sulfate to achieve a Ni:Co:Mn ratio of 49.5:20.1:30.3. The Al concentration of this mixed metal salt solution was 0.046 g/L.

Next, the mixed metal salt solution, ammonia water, and a 20% by mass aqueous solution of sodium hydroxide were pumped into a reactor equipped with an agitator so that the pH and ammonium ion concentration in the reactor were 10.2 and 9.9 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried in a box dryer at 120°C for 12 hours. This produced a precursor of the positive electrode active material.

The precursor of the positive electrode active material was then mixed with lithium carbonate so that the ratio of the number of lithium (Li) atoms (Li/Me), where Me is the sum of the number of atoms of the metals Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 880°C and held at that temperature for 8 hours to obtain the positive electrode active material.

### (Example 7)

First, a 1.5 mol/L mixed metal salt solution was prepared by weighing out the appropriate amounts of nickel sulfate, cobalt sulfate, and manganese sulfate to achieve a Ni:Co:Mn ratio of 49.3:20.3:30.2. The Al concentration of this mixed metal salt solution was 0.06 g/L.

Next, the mixed metal salt solution, ammonia water, and a 20% by mass aqueous solution of sodium hydroxide were pumped into a reactor equipped with an agitator so that the pH and ammonium ion concentration in the reactor were adjusted to 10.2 and 11.1 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried at 120°C for 12 hours using a box dryer. This produced a precursor of the positive electrode active material.

Then, lithium carbonate and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 880°C and held at that temperature for 8 hours to obtain the positive electrode active material.

### (Example 8)

First, a 1.5 mol/L mixed metal salt solution was prepared by weighing out the required amounts of nickel sulfate, cobalt sulfate, and manganese sulfate to achieve a Ni:Co:Mn ratio of 49.0:20.4:30.0. The Al concentration of this mixed metal salt solution was 0.19 g/L.

Next, the mixed metal salt solution, ammonia water, and a 20% by mass aqueous solution of sodium hydroxide were pumped into a reactor equipped with an agitator so that the pH and ammonium ion concentration in the reactor were 10.2 and 10.7 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried at 120°C for 12 hours using a box dryer. This produced a precursor of the positive electrode active material.

Then, lithium carbonate and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 880°C and held at that temperature for 8 hours to obtain the positive electrode active material.

### (Example 9)

First, a 1.5 mol/L mixed metal salt solution was prepared by weighing out the required amounts of nickel sulfate, cobalt sulfate, and manganese sulfate to achieve a Ni:Co:Mn ratio of 50:20:30. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were 10.6 and 14.8 g/L, respectively. A crystallization reaction occurred, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried in a box dryer at 120°C for 12 hours. This produced a precursor of the positive electrode active material.

The precursor of the positive electrode active material was then mixed with lithium carbonate so that the ratio of the number of lithium (Li) atoms (Li/Me), where Me is the sum of the number of atoms of the metals Ni, Co, and Mn in the precursor of the positive electrode active material, was 1.06. This mixture was then mixed in an automatic mortar for 30 minutes to obtain a mixed powder. The mixed powder was then filled into an alumina sagger and fired in a muffle furnace in air at 750°C for 2 hours, then heated to 880°C and held at that temperature for 8 hours to obtain the positive electrode active material.

### (Example 10)

First, a 1.5 mol/L mixed metal salt solution was prepared by weighing out the required amounts of nickel sulfate, cobalt sulfate, and manganese sulfate to achieve a Ni:Co:Mn ratio of 82:15:3. The Al concentration of this mixed metal salt solution was less than 0.001 g/L.

Next, the mixed metal salt solution, ammonia water, and a 20% by mass aqueous sodium hydroxide solution were pumped into a reactor equipped with an agitator so that the pH and ammonium ion concentration in the reactor were adjusted to 11.2 and 13.5 g/L, respectively. A crystallization reaction was then carried out, resulting in the precipitation of a nickel-cobalt-manganese composite hydroxide compound. The reactor's agitator was rotated at 1000 rpm, and the liquid temperature in the reactor was maintained at 60°C using a water jacket.

Nitrogen gas was also introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried at 120°C for 12 hours using a box dryer. This produced a precursor of the positive electrode active material.

Then, lithium hydroxide and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.01. This mixture was mixed in an automatic mortar for 30 minutes to obtain a mixed powder. The mixed powder was then filled into an alumina sagger and fired in a muffle furnace in an oxygen atmosphere at 500°C for 8 hours, then heated to 740°C and held at that temperature for 4 hours to obtain the positive electrode active material.

### (Example 11)

First, a 1.5 mol/L mixed metal salt solution was prepared by weighing out the required amounts of nickel sulfate, cobalt sulfate, and manganese sulfate to achieve a Ni:Co:Mn ratio of 90:7:3. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were 11.0 and 7.2 g/L, respectively. A crystallization reaction was then carried out, resulting in the precipitation of a nickel-cobalt-manganese composite hydroxide compound. The reactor's agitator was rotated at 820 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas; any gas that does not promote oxidation, such as helium, neon, argon, or carbon dioxide, can be used.

The resulting precipitate was then suction filtered, washed with water, and dried in a box dryer at 120°C for 12 hours. This produced a precursor of the positive electrode active material.

Then, lithium hydroxide and the precursor of the positive electrode active material were mixed so that the ratio of the number of lithium (Li) atoms (Li/Me), where Me is the sum of the number of metal atoms consisting of Ni, Co, and Mn in the precursor of the positive electrode active material, was 1.01. This mixture was mixed in an automatic mortar for 30 minutes to obtain a mixed powder. The mixed powder was then filled into an alumina sagger and fired in a muffle furnace in an oxygen atmosphere at 500°C for 8 hours, then heated to 720°C and held at that temperature for 4 hours to obtain the positive electrode active material.

### (Example 12)

First, a 1.5 mol/L mixed metal salt solution was prepared by weighing out the required amounts of nickel sulfate, cobalt sulfate, and manganese sulfate to achieve a Ni:Co:Mn ratio of 90:7:3. The Al concentration of this mixed metal salt solution was less than 0.001 g/L.

Next, the mixed metal salt solution, ammonia water, and a 20% by mass aqueous solution of sodium hydroxide were pumped into a reactor equipped with an agitator so that the pH and ammonium ion concentration in the reactor were 11.0 and 10.0 g/L, respectively. A crystallization reaction was then carried out, resulting in the precipitation of a nickel-cobalt-manganese composite hydroxide compound. The reactor's agitator was rotated at 820 rpm, and the liquid temperature in the reactor was maintained at 60°C using a water jacket.

Nitrogen gas was introduced into the reactor to prevent oxidation of the coprecipitate produced during the crystallization reaction. The gas introduced into the reaction vessel is not limited to nitrogen gas, and any gas that does not promote oxidation, such as helium, neon, argon, or carbon dioxide, can be used.

The resulting precipitate was then suction filtered, washed with water, and dried in a box dryer at 120°C for 12 hours. This produced a precursor of the positive electrode active material.

Then, lithium hydroxide and the precursor of the positive electrode active material were mixed so that the ratio of the number of lithium (Li) atoms (Li/Me), where Me is the sum of the numbers of metal atoms consisting of Ni, Co, and Mn in the precursor of the positive electrode active material, was 0.98. This mixture was then mixed in an automatic mortar for 30 minutes to obtain a mixed powder. The mixed powder was then filled into an alumina sagger and fired in a muffle furnace in an oxygen atmosphere at 500°C for 8 hours, then heated to 720°C and held at that temperature for 4 hours to obtain the positive electrode active material.

### (Composition)

The compositions of the precursors and positive electrode active material powders of Examples 1 to 12 were measured as follows.

Regarding the nickel, cobalt, and manganese compositions, specified amounts of the obtained precursors and positive electrode active material samples (powder) were weighed out, decomposed by alkali fusion, and then analyzed using a Hitachi High-Technologies inductively coupled plasma optical emission spectroscopy (ICP-OES) "PS7800."

Regarding the aluminum compositions of the precursors and positive electrode active materials, specified amounts of the obtained precursors and positive electrode active material samples (powder) were weighed out, dissolved in acid, and then analyzed using an SII NanoTechnology ICP-mass spectrometry (ICP-MS) "SPQ9700."

### (Average Particle Size D50)

The average particle size D50 of the precursors and positive electrode active material powders of Examples 1 to 12 was measured as follows.

100 mg of each obtained precursor and positive electrode active material sample (powder) was dispersed using a Microtrac laser diffraction particle size distribution analyzer "MT3300EXII" by irradiating it with 40 W ultrasound for 60 seconds at a 50% flow rate, after which the particle size distribution was measured and a volume-based cumulative particle size distribution curve was obtained. In the obtained cumulative particle size distribution curve, the volume particle size at 50% accumulation was taken as the 50% cumulative volume particle size D50 (average particle size D50) of the positive electrode active material powder. The aqueous solvent used for measurement was passed through a 0.02 µm filter, the solvent refractive index was 1.333, the particle permeability conditions were transparent, the particle refractive index was 1.81, the shape was aspherical, the measurement range was 0.021 to 2000 µm, and the measurement time was 30 seconds.

### (Tap Density)

The tap density of each of the precursors and positive electrode active material powders of Examples 1-12 was measured as follows.

Five grams of each obtained precursor and positive electrode active material sample (powder) was placed in a 10 cc graduated cylinder and placed in a powder density measuring instrument "KYT-4000K" manufactured by Seishin Enterprise Co., Ltd. After 1,500 taps with a stroke length of 55 mm, the graduated cylinder scale was read. The "sample amount (5 g) / graduated cylinder scale reading (cc)" was then calculated and used as the tap density (g/cc).

### (BET Specific Surface Area)

The BET specific surface area of each of the precursors and positive electrode active material powders of Examples 1-12 was measured as follows. 1.0 g of each obtained precursor and sample (powder) of each positive electrode active material was weighed into a glass cell, set in a degassing device, and the glass cell was filled with nitrogen gas, after which it was heat-treated in a nitrogen gas atmosphere at 40°C for 20 minutes to degas it. The glass cell containing the degassed sample (powder) was then set in a Quantachrome specific surface area measuring device "Monosorb Model MS-21", and the specific surface area X was measured by the BET method (single point method) while flowing a mixed gas of He: 70 at% - N₂: 30 at% as the adsorption gas.

### (c-Axis Lattice Constant)

The c-axis lattice constant of each of the positive electrode active material powders in Examples 1 to 12 was measured as follows.

The following XRD diffractometer and conditions were used:
- XRD Diffractometer: SmartLab (Rigaku Corporation)
- Radiation Source: CuKα (λ=1.5406Å)
- Sample (positive electrode active material) was applied to a glass sample holder (2cm x 1.5cm, 0.3mm deep).
- Detector: D/tex
- Measurement Range: 2θ=10° to 80°
- Scan Axis: 2θ/θ, Scan Speed: 1° min⁻¹
- Step Width: 0.01°
- Slit width: IS (DS) 1/4°, RS1 10 mm, RS2 10 mm

The c-axis lattice constant was calculated using the analytical software "PDXL" (Rigaku Corporation) from the peaks derived from nine crystal planes (003), (101), (012), (104), (015), (107), (018), (110), and (113) in the XRD diffraction pattern measured under the above conditions.

### (Discharge Capacity)

The discharge capacity of each of the positive electrode active material powders from Examples 1 to 12 was measured as follows.

The resulting positive electrode active material was weighed out with a conductive material (acetylene black) and a binder (polyvinylidene fluoride) in a ratio of 90:5:5. The binder was dissolved in an organic solvent (N-methylpyrrolidone), and the positive electrode material and conductive material were mixed to form a slurry. This slurry was then applied to an Al foil, dried, and pressed to form a positive electrode. Next, a 2032-type coin cell for evaluation was fabricated using a Li counter electrode. The electrolyte was a 1M LiPF₆ solution in EC-DMC (3:7), and the initial battery characteristics (charge capacity, discharge capacity, and charge/discharge characteristics) were measured at 25°C. The charge/discharge conditions were: charge condition: CC/CV 4.3 V, 0.1 C; discharge condition: CC 0.05 C, up to 3.0 V.

The manufacturing conditions and evaluation results of Examples 1 to 12 above are shown in Tables 1 and 2.

**Table 1**

| | **Crystallization reaction conditions** | | | | **Precursor powder properties** | | | **Precursor Composition** | | | | **Firing conditions** | |
|---|---|---|---|---|---|---|---|---|---|---|---|---|---|
| | **Reaction temperature** | **Ammonium ion concentration** | **pH** | **Agitator rotation speed** | **Average particle size D50** | **Tap Density** | **BET specific surface area** | **Ni** | **Co** | **Mn** | **Al** | **Li/Me ratio** | **Firing temperature** |
| | **°C** | **g/L** | | **r p m** | **µm** | **g/cc** | **m²/g** | **mol%** | **mol%** | **mol%** | **mol%** | | **°C** |
| **EX.1** | **60** | **10.3** | **10.6** | **1000** | **5.9** | **1.9** | **10.9** | **50** | **20** | **30** | **0.00007** | **1.06** | **900** |
| **EX.2** | **60** | **11.5** | **10.4** | **1000** | **7.6** | **2.1** | **5.3** | **50** | **20** | **30** | **0.00003** | **1.09** | **900** |
| **EX.3** | **60** | **8.2** | **10.3** | **1000** | **10.3** | **2.3** | **5.1** | **50** | **20** | **30** | **0.00010** | **1.06** | **880** |
| **EX.4** | **60** | **11.2** | **10.1** | **1000** | **10.2** | **2.3** | **4.5** | **50** | **20** | **30** | **0.00003** | **1.06** | **900** |
| **EX.5** | **60** | **11.3** | **10.2** | **1000** | **9.9** | **2.3** | **5.4** | **50** | **20** | **30** | **0.00065** | **1.06** | **880** |
| **EX.6** | **60** | **9.9** | **10.2** | **1000** | **9.8** | **2.4** | **4.6** | **49.5** | **20.1** | **30.3** | **0.13** | **1.06** | **880** |
| **EX.7** | **60** | **11.1** | **10.2** | **1000** | **9.7** | **2.3** | **5.7** | **49.3** | **20.3** | **30.2** | **0.20** | **1.06** | **880** |
| **EX.8** | **60** | **10.7** | **10.2** | **1000** | **9.4** | **2.2** | **6.0** | **49.0** | **20.4** | **30.0** | **0.54** | **1.06** | **880** |
| **EX.9** | **60** | **14.8** | **10.6** | **1000** | **9.2** | **2.2** | **4.2** | **50** | **20** | **30** | **0.00003** | **1.06** | **880** |
| **EX.10** | **60** | **13.5** | **11.2** | **1000** | **4.0** | **1.8** | **4.2** | **82** | **15** | **3** | **0.00028** | **1.01** | **740** |
| **EX.11** | **60** | **7.2** | **11.0** | **820** | **4.5** | **1.9** | **10.6** | **90** | **7** | **3** | **0.00003** | **1.01** | **720** |
| **EX.12** | **60** | **10.0** | **11.0** | **820** | **5.6** | **1.9** | **6.9** | **90** | **7** | **3** | **0.00003** | **0.98** | **720** |

**Table 2**

| | **Characteristics of positive electrode active material powder** | | | | **Composition of positive electrode active material powder** | | | | | **Electrochemical properties** |
|---|---|---|---|---|---|---|---|---|---|---|
| | **Average particle size D50** | **BET specific surface area** | **Tap Density** | **c-axis** | **Ni** | **Co** | **Mn** | **Al** | **Li/Me ratio** | **discharge capacity** |
| | **µm** | **m²/g** | **g/cc** | **A** | **mol%** | **mol%** | **mol%** | **mol%** | | **mAh/g** |
| **EX.1** | **5.9** | **0.70** | **2.1** | **14.233** | **49.9** | **19.7** | **30.4** | **about 0.00003** | **1.05** | **174** |
| **EX.2** | **7.4** | **0.34** | **2.4** | **14.232** | **49.4** | **19.9** | **30.8** | **about 0.00003** | **1.09** | **176** |
| **EX.3** | **9.9** | **0.24** | **2.6** | **14.235** | **49.3** | **19.8** | **30.9** | **about 0.00003** | **1.07** | **175** |
| **EX.4** | **9.9** | **0.29** | **2.5** | **14.235** | **49.1** | **19.6** | **31.2** | **0.010** | **1.05** | **173** |
| **EX.5** | **9.4** | **0.28** | **2.6** | **14.238** | **50.1** | **20.2** | **29.8** | **0.019** | **1.06** | **176** |
| **EX.6** | **9.2** | **0.32** | **2.6** | **14.252** | **49.7** | **20.2** | **30.1** | **0.126** | **1.05** | **176** |
| **EX.7** | **9.0** | **0.33** | **2.6** | **14.239** | **49.7** | **20.2** | **30.2** | **0.210** | **1.08** | **176** |
| **EX.8** | **8.9** | **0.35** | **2.4** | **14.246** | **49.7** | **20.2** | **30.1** | **0.475** | **1.05** | **175** |
| **EX.9** | **8.6** | **0.32** | **2.5** | **14.239** | **50.1** | **20.1** | **29.8** | **0.013** | **1.08** | **176** |
| **EX.10** | **4.1** | **0.67** | **2.2** | **14.185** | **82.1** | **14.9** | **2.9** | **0.013** | **1.01** | **220** |
| **EX.11** | **6.5** | **0.64** | **2.1** | **14.195** | **90.1** | **6.9** | **3.0** | **0.011** | **1.01** | **225** |
| **EX.12** | **6.0** | **0.44** | **2.1** | **14.184** | **89.9** | **7.0** | **3.1** | **0.011** | **0.98** | **223** |

### (Evaluation Results)

The positive electrode active materials of Examples 1 to 12 all had the following composition formula. Note that the "Li/Me ratio" in Tables 1 and 2 indicates the Li composition ratio to the total Ni, Co, and Mn in the positive electrode active material

Composition formula LiₐNi_{(1-b-c-d)}Co_{b}Mn_{c}AI_{d}O₂

### (In the above formula, 0.98≦a≦1.09, 0.06≦b≦0.21, 0.02≦c≦0.32, and 0.0000003≦d≦0.007.)

Furthermore, the positive electrode active materials of Examples 1 to 12 all satisfied conditions of a 50% cumulative volume particle size D50 of 3.0 to 11.0 µm, a tap density of 2.0 to 2.6 g/cc, and a c-axis lattice constant of 14.180 to 14.255 Å. They also demonstrated favorable battery characteristics (discharge capacity).

## Claims

1. A positive electrode active material for lithium ion batteries, having a composition represented by the formula: LiₐNi_{(1-b-c-d)}CO_{b}Mn_{c}Al_{d}O₂
(wherein, 0.98≦a≦1.09, 0.06≦b≦0.21, 0.02≦c≦0.32, and 0.0000003≦d≦0.007), a 50% cumulative volume particle size D50 of 3.0 to 11.0 µm, a tap density of 2.0 to 2.6 g/cc, and a c-axis lattice constant of 14.180 to 14.255 Å.

2. The positive electrode active material for lithium ion batteries according to claim 1, having a BET specific surface area of 0.20 to 0.80 m²/g.

3. A positive electrode for lithium ion batteries, comprising the positive electrode active material for lithium ion batteries according to claim 1 or 2.

4. A lithium ion battery comprising the positive electrode for lithium ion batteries according to claim 3 and a negative electrode.

5. A method for producing a precursor of a positive electrode active material for lithium ion batteries, wherein the precursor is represented by the composition formula: Ni_{(1-b-c-d)}CO_{b}Mn_{c}Al_{d}(OH)₂
(In the formula, 0.06≦b≦0.21, 0.02≦c≦0.32, and 0.0000003≦d≦0.007),
the precursor has a 50% cumulative volume particle size D50 of 3.0 to 11.0 µm, a tap density of 1.8 to 2.4 g/cc, and a BET specific surface area of 4.0 to 12.0 m²/g, and
the method comprises:
using an aqueous solution containing (a) a nickel salt, (b) a cobalt salt, (c) a manganese salt, and (d) an aluminum salt, and (e) a basic aqueous solution containing ammonia and/or a basic aqueous solution of an alkali metal as a reaction solution, and conducting a crystallization reaction while controlling a pH of the reaction solution to 10.0 to 11.5, an ammonium ion concentration to 7 to 20 g/L, and a solution temperature to 59 to 61° C.

6. A method for producing a positive electrode active material for lithium ion batteries, comprising:
mixing a precursor produced by the method for producing the precursor of the positive electrode active material for lithium ion batteries according to claim 5 with a lithium source so that the ratio (Liₙ/Meₙ) of the number of lithium atoms (Liₙ) to the sum of the numbers of atoms of metals consisting of Ni, Co, and Mn (Meₙ) is 0.98 to 1.09 to form a lithium mixture; and
firing the lithium mixture in air or an oxygen atmosphere at 450 to 750°C for 2 to 15 hours, and then further firing it at 700 to 900°C for 2 to 15 hours.
